# EUROPEAN PATENT APPLICATION

(11) **EP 4 764 394 A1**
(43) Date of publication of application: **24.06.2026**
(21) Application number: 25196892.1
(22) Date of filing: 20.08.2025
(51) Int. Cl.: G01B 3/1061, G01B 3/1094

(54) **DIGITAL DISPLAY TAPE MEASURE AND MEASURING METHOD THEREOF**

(30) Priority: 20.12.2024 CN 202423149866 U; 20.12.2024 CN 202423149642 U
(71) Applicant: Sndway Technology (Guangdong) Co., Ltd., Dongguan Guangdong (CN)
(72) Inventor: Huang, Zan, Humen Town, Dongguan, Guangdong (CN); He, Gang, Humen Town, Dongguan, Guangdong (CN)
(74) Representative: Herrero & Asociados, S.L.

(57) **Abstract**

A digital display tape measure includes a housing, a tape measure mechanism disposed inside the housing and with multiple dark stripes disposed at equal intervals on a tape thereof, a digital display sensor cooperating with the tape measure mechanism, a display screen for displaying a feedback result of the digital display sensor, and a control circuit board electrically connected to the digital display sensor and the display screen and integrated with an MCU. The MCU is electrically connected to a first comparator, a second comparator, photoelectric sensors, a signal acquisition circuit, a signal processing circuit, and the display screen. The MCU is configured to perform counting by acquiring a rising edge and a falling edge of a first comparison signal or a second comparison signal, determine a displacement direction of the tape, calculate out displacement, and output the displacement to the display screen.

## Description

### TECHNICAL FIELD

The invention relates to the technical field of measuring instruments, and more particularly to a digital display tape measure and a measuring method thereof.

### BACKGROUND

With continuous development of science and technology, tape measures in the art that rely on manual reading of a tape are relatively cumbersome and inefficient. To solve aforementioned problems, tape measure manufacturers have developed a digital display tape measure. The digital display tape measure is equipped with a photoelectric displacement sensor, a tape with special markings, and a display screen on a tape measure mechanism. In this way, during operation, a user simply pulls the tape, and the photoelectric displacement sensor quickly identifies and calculates out displacement of the tape based on the special markings on the tape, and the displacement is directly displayed on the display screen, allowing the user to easily read the displacement. This significantly enhances convenience and measurement efficiency of the tape measure.

However, the digital display tape measure in the art can only count in one direction. When a pulling distance exceeds a preset measuring distance, the digital display tape measure cannot perform subtraction counting after being retracted, resulting in inconvenient measurement and affecting measurement efficiency. Moreover, the digital display tape measure in the art has a low measurement accuracy, which cannot meet needs during use.

### SUMMARY

To solve disadvantages and deficiencies in related art, the invention provides a digital display tape measure, which can identify a displacement direction of a tape, realize quick measurement, and improve measurement accuracy.

To realize aforementioned objectives, main technical solutions used by the invention are as follows.

The digital display tape measure includes a housing, a tape measure mechanism, a digital display sensor, a display screen, and a control circuit board; the tape measure mechanism is disposed inside the housing, multiple dark stripes are disposed on a tape of the tape measure mechanism at equal intervals, the digital display sensor is configured to cooperate with the tape measure mechanism, the display screen is configured to display a feedback result of the digital display sensor, the control circuit board is electrically connected to the digital display sensor and the display screen, and the control circuit board is integrated with a microcontroller unit (MCU);
the digital display sensor includes a signal acquisition module and a signal processing module;
the signal acquisition module includes at least one photoelectric sensor group; each of the at least one photoelectric sensor group includes three consecutively and equidistantly arranged photoelectric sensors and a signal acquisition circuit electrically connected to the photoelectric sensors; the photoelectric sensors are respectively configured to acquire a first signal, a second signal, and a third signal; a phase difference between output waveform signals of the first signal and the second signal and a phase difference between output waveform signals of the second signal and the third signal each are 90 degrees (°);
the signal processing module includes a first comparator, a second comparator and a signal processing circuit; a fourth signal is configured to be generated by averaging a sum of the first signal and the third signal; a negative input terminal of the first comparator and a negative terminal of the second comparator are configured to connect the fourth signal; a positive input terminal of the first comparator is configured to connect the first signal, and a positive input terminal of the second comparator is configured to connect the second signal; the first comparator is configured to compare the first signal with the fourth signal, and output a first comparison signal being a high level when the first signal is greater than the fourth signal or being a low level when the first signal is less than the fourth signal; the second comparator is configured to compare the second signal with the fourth signal, and output a second comparison signal being a high level when the second signal is greater than the fourth signal or being a low level when the second signal is less than the fourth signal; and
the MCU is electrically connected to the first comparator, the second comparator, the photoelectric sensors, the signal acquisition circuit, the signal processing circuit, and the display screen; and the MCU is configured to perform counting by acquiring a rising edge and a falling edge of the first comparison signal or the second comparison signal, determine a displacement direction of the tape based on a phase difference between the first comparison signal and the second comparison signal, calculate out displacement, and output the displacement to the display screen.

The signal processing circuit includes a first signal input circuit, a second signal input circuit, a third signal input circuit, a first comparator peripheral circuit, and a second comparator peripheral circuit.

The first signal input circuit includes a first resistor. An end of the first resistor is configured to connect the first signal, and another end of the first resistor is connected to the positive input terminal of the first comparator. The second signal input circuit includes a second resistor. An end of the second resistor is configured to connect the second signal, and another end of the second resistor is connected to the positive input terminal of the second comparator. The third signal input circuit includes a fourth resistor. An end of the fourth resistor is configured to connect the third signal, and another end of the fourth resistor is connected to an end of the third resistor, the negative input terminal of the first comparator, and the negative input terminal of the second comparator; and another end of the third resistor is configured to connect the first signal.

The first comparator peripheral circuit includes a fifth resistor. An end of the fifth resistor is connected to a first power supply VDD, and another end of the fifth resistor is connected to an output terminal of the first comparator, an end of a sixth resistor and an end of a second capacitor. Another end of the sixth resistor serves as an output end of the first comparison signal. The first comparator peripheral circuit further includes a first capacitor. An end of the first capacitor is connected to the power supply VDD and the first comparator. The second comparator peripheral circuit includes a seventh resistor. An end of the seventh resistor is connected to the power supply VDD, and another end of the seventh resistor is connected to an output terminal of the second comparator, an end of a third capacitor, and an end of an eighth resistor. Another end of the eighth resistor serves as an output end of the second comparison signal.

The signal acquisition circuit is digital-to-analog converter (DAC) signal control circuits. Each of the photoelectric sensors is connected to an input end of the MCU through an analog-to-digital converter (ADC) output. DAC output ends of the MCU are connected to the DAC signal control circuits. The DAC signal control circuits are configured to, based on comparison results of ADC signals in the MCU, change currents of the respective photoelectric sensors to thereby adjust brightnesses of the respective photoelectric sensors.

Each of the DAC signal control circuits is a first metal oxide semiconductor (MOS) transistor. A gate of the first MOS transistor is connected to one of the DAC output ends of the MCU. A drain of the first MOS transistor is connected to one of the photoelectric sensors. A source of the first MOS transistor is grounded.

The signal acquisition circuit is pulse width modulation (PWM) signal control circuits. Each of the photoelectric sensors is connected to the input end of the MCU through the ADC output. PWM output ends of the MCU are respectively connected to the PWM signal control circuits. The PWM signal control circuits are configured to, based on the comparison results of ADC signals in the MCU, change the currents of the respective photoelectric sensors to thereby adjust the brightnesses of the respective photoelectric sensors.

Each of the PWM signal control circuits includes a second MOS transistor, a first protection resistor, a second protection resistor, a first filter capacitor, and a second filter capacitor. A gate of the second MOS transistor is connected to the second protection resistor and the second filter capacitor. The second protection resistor is further connected to the first protection resistor and the first filter capacitor. The first protection resistor is connected to a third protection resistor and one of the PWM output ends of the MCU. A drain of the second MOS transistor is connected to one of the photoelectric sensors. A source of the second MOS transistor is grounded.

A spacing among the photoelectric sensors is in a range of 3 millimeters (mm) to 4 mm.

The digital display tape measure further includes a laser rangefinder, a laser line projector, and an optical bracket. The optical bracket is disposed along a radial direction of the tape measure mechanism. The laser rangefinder and the laser line projector are juxtaposedly secured on the optical bracket. The control circuit board is fixed on the optical bracket.

A measuring method of the digital display tape measure includes the following steps:
(1) pulling the tape to make the tape move relative to the digital display sensor; and generating, by the photoelectric sensors based on changes of the multiple dark stripes disposed on the tape at equal intervals, the first signal, the second signal, and the third signal with phase differences of 90 °;
(2) generating, by averaging the sum of the first signal and the third signal, the fourth signal;
(3) comparing, by the first comparator, the first signal with the fourth signal; and outputting, by the first comparator, the first comparison signal being the high level when the first signal is greater than the fourth signal or being the low level when the first signal is less than the fourth signal;
(4) comparing, by the second comparator, the second signal with the fourth signal; and outputting, by the second comparator, the second comparison signal being the high level when the second signal is greater than the fourth signal or being the low level when the second signal is less than the fourth signal; and
(5) taking the first comparison signal or the second comparison signal as a counting object; performing counting based on the rising edge and the falling edge of the first comparison signal or the second comparison signal; and determining the displacement direction of the tape based on the phase difference between the first comparison signal and the second comparison signal and calculating out the displacement.

The step (5) specifically includes: when taking the first comparison signal as a counting signal and the second comparison signal as a direction determining signal, the rising edge of the first comparison while the second comparison signal is at the low level triggers a positive increment in the counting, indicating the tape is moving outward; the rising edge of the first comparison signal while the second comparison signal is at the high level triggers a negative increment in the counting, indicating the tape is moving inward, thereby realizing displacement measurement and readout.

The invention has the following beneficial effects. By the three consecutively and equidistantly arranged photoelectric sensors with a phase difference between signals of two adjacent photoelectric sensors of 90 °, the fourth signal is generated by averaging the sum of the first signal generated by a first photoelectric sensor and the third signal generated by a third photoelectric sensor. The first comparator compares the first signal generated by the first photoelectric sensor with the fourth signal to output the first comparison signal. The second comparator compares the second signal generated by the second photoelectric sensor with the fourth signal to output the second comparison signal. The displacement direction of the tape is determined based on the phase difference between the first comparison signal and the second comparison signal, thereby realizing quick accumulation and reverse accumulation of tape movement and improving the measurement accuracy and measurement efficiency of the digital display tape measure.

### BRIEF DESCRIPTION OF DRAWINGS

To explain technical solutions of embodiments of the invention more clearly, attached drawings required by the embodiments of the invention will be briefly introduced as follows. It should be understood that, the attached drawings introduced as follows merely illustrate some embodiments of the invention; therefore, the attached drawings should not be regarded as limiting a scope of protection of the invention. For those skilled in the art, other related attached drawings can be obtained based on the attached drawings without creative labor.

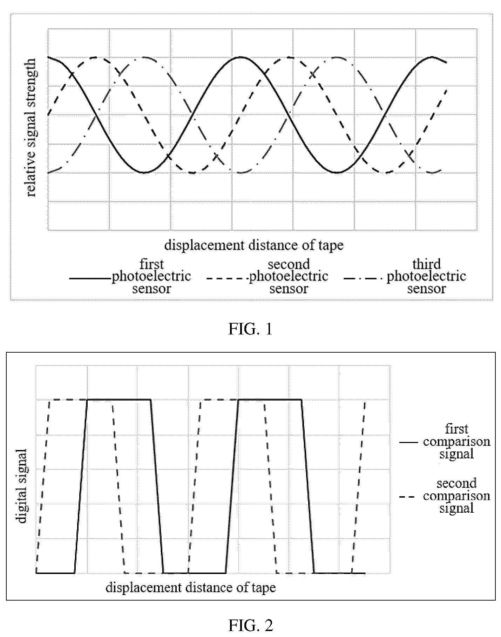

FIG. 1 illustrates a schematic diagram of signal waveforms of three photoelectric sensors, namely, a first photoelectric sensor, a second photoelectric sensor and a third photoelectric sensor according to an embodiment of the invention.
FIG. 2 illustrates a schematic diagram of signal waveforms of a first comparison signal outputted by a first comparator and a second comparison signal outputted by a second comparator according to an embodiment of the invention.

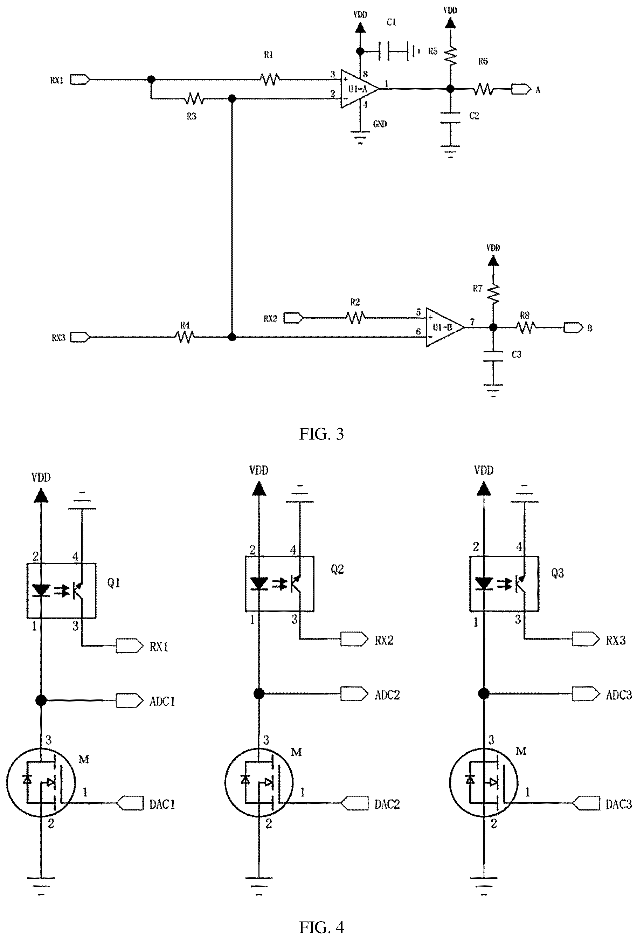

FIG. 3 illustrates a schematic diagram of a signal processing module according to an embodiment of the invention.
FIG. 4 illustrates a schematic diagram of a signal acquisition module with a signal acquisition circuit being DAC signal control circuits according to an embodiment of the invention.

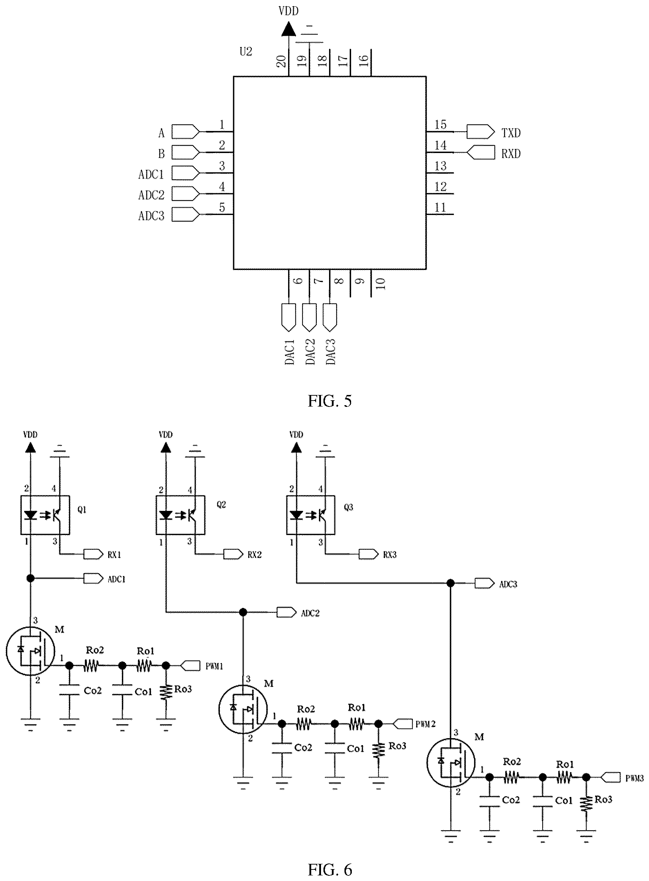

FIG. 5 illustrates a schematic diagram of an MCU corresponding to the DAC signal control circuits according to an embodiment of the invention.
FIG. 6 illustrates a schematic diagram of a signal acquisition module with a signal acquisition circuit being PWM signal control circuits according to another embodiment of the invention.

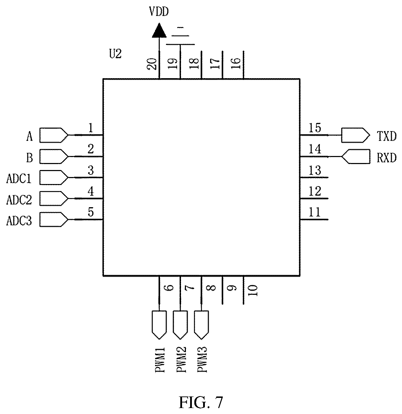

FIG. 7 illustrates a schematic diagram of an MCU corresponding to the PWM signal control circuits according to an embodiment of the invention.

### DETAILED DESCRIPTION OF EMBODIMENTS

To better illustrate the invention and facilitate understanding, the invention will be described in detail as follows through specific embodiments with reference to attached drawings.

To better understand aforementioned technical solutions, illustrative embodiments of the invention will be described in more detail with reference to the attached drawings. Although the illustrative embodiments of the invention are illustrated in the attached drawings, it should be understood that, the invention can be realized through various approaches and is not limited by the illustrative embodiments described herein. On a contrary, the illustrative embodiments described herein are used to understand the invention more clearly and thoroughly and to convey a scope of protection of the invention to those skilled in the art.

### Embodiment 1

A digital display tape measure includes a housing, a tape measure mechanism, a digital display sensor, a display screen, and a control circuit board. The tape measure mechanism is disposed inside the housing. Multiple dark stripes are disposed on a tape of the tape measure mechanism at equal intervals. The digital display sensor is configured to cooperate with the tape measure mechanism. The display screen is configured to display a feedback result of the digital display sensor. The control circuit board is electrically connected to the digital display sensor and the display screen. The control circuit board is integrated with an MCU.

The digital display sensor includes a signal acquisition module and a signal processing module. The signal acquisition module includes at least one photoelectric sensor group. Each of the at least one photoelectric sensor group includes three consecutively and equidistantly arranged photoelectric sensors and a signal acquisition circuit electrically connected to the photoelectric sensors. The photoelectric sensors are respectively configured to acquire a first signal, a second signal, and a third signal. A phase difference between output waveform signals of the first signal and the second signal and a phase difference between output waveform signals of the second signal and the third signal each are 90 °. The signal processing module includes a first comparator, a second comparator and a signal processing circuit. A fourth signal is configured to be generated by averaging a sum of the first signal and the third signal. A negative input terminal of the first comparator and a negative input terminal of the second comparator are configured to connect the fourth signal. A positive input terminal of the first comparator is configured to connect the first signal, and a positive input terminal of the second comparator is configured to connect the second signal. The first comparator is configured to compare the first signal with the fourth signal and output a first comparison signal being a high level when the first signal is greater than the fourth signal or being a low level when the first signal is less than the fourth signal. The second comparator is configured to compare the second signal with the fourth signal and outputs a second comparison signal being a high level when the second signal is greater than the fourth signal or being a low level when the second signal is less than the fourth signal.

The MCU is electrically connected to the first comparator, the second comparator, the photoelectric sensors, the signal acquisition circuit, the signal processing circuit, and the display screen. The MCU is configured to perform counting by acquiring a rising edge and a falling edge of the first comparison signal or the second comparison signal, determine a displacement direction of the tape based on a phase difference between the first comparison signal and the second comparison signal, calculate out displacement, and output the displacement to the display screen.

The signal processing circuit includes a first signal input circuit, a second signal input circuit, a third signal input circuit, a first comparator peripheral circuit, and a second comparator peripheral circuit.

The first signal input circuit includes a first resistor R1. An end of the first resistor R1 is configured to connect the first signal RX1, and another end of the first resistor R1 is connected to the positive input terminal of the first comparator U1-A. The second signal input circuit includes a second resistor R2. An end of the second resistor R2 is configured to connect the second signal RX2, and another end of the second resistor R2 is connected to the positive input terminal of the second comparator U1-B. The third signal input circuit includes a fourth resistor R4. An end of the fourth resistor R4 is configured to connect the third signal RX3, and another end of the fourth resistor R4 is connected to an end of a third resistor R3, the negative input terminal of the first comparator U1-A and the negative input terminal of the second comparator U1-B. Another end of the third resistor R3 is configured to connect the first signal RX1.

The first comparator peripheral circuit includes a fifth resistor R5. An end of the fifth resistor R5 is connected to a power supply VDD, and another end of the fifth resistor R5 is connected to an output terminal of the first comparator U1-A, an end of a sixth resistor R6 and an end of a second capacitor C2. Another end of the sixth resistor R6 serves as an output end of the first comparison signal. The first comparator peripheral circuit further includes a first capacitor C1. An end of the first capacitor C1 is connected to the power supply VDD and the first comparator U1-A. The second comparator peripheral circuit includes a seventh resistor R7. An end of the seventh resistor R7 is connected to the power supply VDD, and another end of the seventh resistor R7 is connected to an output terminal of the second comparator U1-B, an end of a third capacitor C3, and an end of an eighth resistor R8. Another end of the eighth resistor R8 serves as an output end of the second comparison signal.

The signal acquisition circuit is DAC signal control circuits. Each of the photoelectric sensors is connected to an input end of the MCU through an ADC output. DAC output ends of the MCU are respectively connected to the DAC signal control circuits. The DAC signal control circuits are configured to, based on comparison results of ADC signals in the MCU, change currents of the respective photoelectric sensors Q1 through Q3 to thereby adjust brightnesses of the respective photoelectric sensors Q1 through Q3.

Each of the DAC signal control circuits is a first MOS transistor. A gate of the first MOS transistor is connected to one of the DAC output ends of the MCU. A drain of the first MOS transistor is connected to one of the photoelectric sensors Q1 through Q3. A source of the first MOS transistor is grounded.

### Embodiment 2

The signal acquisition circuit is PWM signal control circuits. Each of the photoelectric sensors is connected to the input end of the MCU through the ADC output. PWM output ends of the MCU are respectively connected to the PWM signal control circuits. The PWM signal control circuits are configured to, based on the comparison results of ADC signals in the MCU, change the currents of the respective photoelectric sensors Q1 through Q3 to thereby adjust the brightnesses of the respective photoelectric sensors Q1 through Q3.

Each of the PWM signal control circuits includes a second MOS transistor, a first protection resistor, a second protection resistor, a first filter capacitor, and a second filter capacitor. A gate of the second MOS transistor is connected to the second protection resistor and the second filter capacitor. The second protection resistor is connected to the first protection resistor and the first filter capacitor. The first protection resistor is connected to a third protection resistor and one of the PWM output ends of the MCU. A drain of the second MOS transistor is connected to one of the photoelectric sensors Q1 through Q3. A source of the second MOS transistor is grounded.

A spacing among the photoelectric sensors is in a range of 3 mm to 4 mm. In the embodiment, the spacing is 3.6 mm.

The digital display tape measure further includes a laser rangefinder, a laser line projector, and an optical bracket. The optical bracket is disposed along a radial direction of the tape measure mechanism. The laser rangefinder and the laser line projector are juxtaposedly secured on the optical bracket. The control circuit board is fixed on the optical bracket.

A measuring method of the digital display tape measure includes the following steps (1) through (6).
(1) The tape is pulled to move relative to the digital display sensor. The photoelectric sensors generate, based on changes of the multiple dark stripes disposed on the tape at equal intervals, the first signal, the second signal and the third signal with phase differences of 90 °.
(2) The fourth signal is generated by averaging the sum of the first signal and the third signal.
(3) The first signal is compared with the fourth signal by the first comparator. The first comparison signal is outputted by the first comparator being the high level when the first signal is greater than the fourth signal or being the low level when the first signal is less than the fourth signal.
(4) The second signal is compared with the fourth signal by the second comparator. The second comparison signal is outputted by the second comparator being the high level when the second signal is greater than the fourth signal or being the low level when the second signal is less than the fourth signal.
(5) The first comparison signal or the second comparison signal is taken as a counting object. Counting is performed based on the rising edge and the falling edge of the first comparison signal or the second comparison signal. The displacement direction of the tape is determined based on the phase difference between the first comparison signal and the second comparison signal. The displacement is calculated out.

The step (5) specifically includes the following steps. When taking the first comparison signal as a counting signal and the second comparison signal as a direction determining signal, the rising edge of the first comparison signal while the second comparison signal is at the low level triggers a positive increment in the counting, indicating the tape is moving outward; and the rising edge of the first comparison signal while the second comparison signal is at the high level triggers a negative increment in the counting, indicating that the tape is moving inward, thereby realizing displacement measurement and readout.

The step (2) further includes the following steps. After the fourth signal is generated by averaging the sum of the first signal and the third signal, brightnesses of the photoelectric sensors generating the first signal and the second signal are adjusted by the MCU through the PWM signal control circuits or the DAC signal control circuits based on a duty cycle of the fourth signal, to thereby keep the duty cycle of the fourth signal at 50%.

The MCU, based on a universal asynchronous receiver/transmitter (UART) serial communication protocol, transmits the displacement to a central controller of the digital display tape measure in a form of American standard code for information interchange (ASCII) bit protocol data frame through a transmit data (TXD) transmission port.

## Claims

1. A digital display tape measure, comprising a housing, a tape measure mechanism, a digital display sensor, a display screen, and a control circuit board; wherein the tape measure mechanism is disposed inside the housing, a plurality of dark stripes are disposed on a tape of the tape measure mechanism at equal intervals, the digital display sensor is configured to cooperate with the tape measure mechanism, the display screen is configured to display a feedback result of the digital display sensor, the control circuit board is electrically connected to the digital display sensor and the display screen, and the control circuit board is integrated with a microcontroller unit (MCU);
wherein the digital display sensor comprises a signal acquisition module and a signal processing module;
wherein the signal acquisition module comprises at least one photoelectric sensor group; each of the at least one photoelectric sensor group comprises three consecutively and equidistantly arranged photoelectric sensors, and a signal acquisition circuit electrically connected to the photoelectric sensors; the photoelectric sensors are respectively configured to acquire a first signal, a second signal, and a third signal; a phase difference between output waveform signals of the first signal and the second signal and a phase difference between output waveform signals of the second signal and the third signal each are 90 degrees (°);
wherein the signal processing module comprises a first comparator, a second comparator and a signal processing circuit; a fourth signal is configured to be generated by averaging a sum of the first signal and the third signal, a negative input terminal of the first comparator and a negative input terminal of the second comparator are configured to connect the fourth signal, a positive input terminal of the first comparator is configured to connect the first signal, and a positive input terminal of the second comparator is configured to connect the second signal; the first comparator is configured to compare the first signal with the fourth signal, and output a first comparison signal being a high level when the first signal is greater than the fourth signal or being a low level when the first signal is less than the fourth signal; and the second comparator is configured to compare the second signal with the fourth signal, and output a second comparison signal being a high level when the second signal is greater than the fourth signal or being a low level when the second signal is less than the fourth signal; and
wherein the MCU is electrically connected to the first comparator, the second comparator, the photoelectric sensors, the signal acquisition circuit, the signal processing circuit, and the display screen; and the MCU is configured to perform counting by acquiring a rising edge and a falling edge of the first comparison signal or the second comparison signal, determine a displacement direction of the tape based on a phase difference between the first comparison signal and the second comparison signal, calculate out displacement, and output the displacement to the display screen.

2. The digital display tape measure as claimed in claim 1, wherein the signal processing circuit comprises a first signal input circuit, a second signal input circuit, a third signal input circuit, a first comparator peripheral circuit, and a second comparator peripheral circuit.

3. The digital display tape measure as claimed in claim 2, wherein the first signal input circuit comprises a first resistor, an end of the first resistor is configured to connect the first signal, and another end of the first resistor is connected to the positive input terminal of the first comparator; the second signal input circuit comprises a second resistor, an end of the second resistor is configured to connect the second signal, and another end of the second resistor is connected to the positive input terminal of the second comparator; the third signal input circuit comprises a fourth resistor, an end of the fourth resistor is configured to connect the third signal, and another end of the fourth resistor is connected to an end of a third resistor, the negative input terminal of the first comparator and the negative input terminal of the second comparator; and another end of the third resistor is configured to connect the first signal.

4. The digital display tape measure as claimed in claim 2, wherein the first comparator peripheral circuit comprises a fifth resistor, an end of the fifth resistor is connected to a power supply VDD, and another end of the fifth resistor is connected to an output terminal of the first comparator, an end of a sixth resistor and an end of a second capacitor; another end of the sixth resistor serves as an output end of the first comparison signal; the first comparator peripheral circuit further comprises a first capacitor, and an end of the first capacitor is connected to the power supply VDD and the first comparator; and
wherein the second comparator peripheral circuit comprises a seventh resistor; an end of the seventh resistor is connected to the power supply VDD, another end of the seventh resistor is connected to an output terminal of the second comparator, an end of a third capacitor and an end of an eighth resistor; and another end of the eighth resistor serves as an output end of the second comparison signal.

5. The digital display tape measure as claimed in claim 1, wherein the signal acquisition circuit is digital-to-analog converter (DAC) signal control circuits; each of the photoelectric sensors is connected to an input end of the MCU through an analog-to-digital converter (ADC) output; DAC output ends of the MCU are respectively connected to the DAC signal control circuits; and the DAC signal control circuits are configured to, based on comparison results of ADC signals in the MCU, change currents of the respective photoelectric sensors to thereby adjust brightnesses of the respective photoelectric sensors.

6. The digital display tape measure as claimed in claim 5, wherein each of the DAC signal control circuits is a first metal-oxide-semiconductor (MOS) transistor, a gate of the first MOS transistor is connected to one of the DAC output ends of the MCU, a drain of the first MOS transistor is connected to one of the photoelectric sensors, and a source of the first MOS transistor is grounded.

7. The digital display tape measure as claimed in claim 1, wherein the signal acquisition circuit is pulse width modulation (PWM) signal control circuits; each of the photoelectric sensors is connected to an input end of the MCU through an ADC output; PWM output ends of the MCU are respectively connected to the PWM signal control circuits; and the PWM signal control circuits are configured to, based on comparison results of ADC signals in the MCU, change currents of the respective photoelectric sensors to thereby adjust brightnesses of the respective photoelectric sensors.

8. The digital display tape measure as claimed in claim 7, wherein each of the PWM signal control circuits comprise a second MOS transistor, a first protection resistor, a second protection resistor, a first filter capacitor, and a second filter capacitor; a gate of the second MOS transistor is connected to the second protection resistor and the second filter capacitor, the second protection resistor is further connected to the first protection resistor and the first filter capacitor, the first protection resistor is further connected to a third protection resistor and one of the PWM output ends of the MCU, a drain of the second MOS transistor is connected to one of the photoelectric sensors, and a source of the second MOS transistor is grounded.

9. The digital display tape measure as claimed in claim 1, wherein a spacing among the photoelectric sensors is in a range of 3 millimeters (mm) to 4 mm.

10. The digital display tape measure as claimed in claim 1, further comprising a laser rangefinder, a laser line projector, and an optical bracket; wherein the optical bracket is disposed along a radial direction of the tape measure mechanism, the laser rangefinder and the laser line projector are juxtaposedly secured on the optical bracket; and the control circuit board is fixed on the optical bracket.

11. A measuring method of the digital display tape measure as claimed in claim 1, comprising the following steps:
(1) pulling the tape to make the tape move relative to the digital display sensor; and generating, by the photoelectric sensors based on changes of the plurality of dark stripes disposed on the tape at equal intervals, the first signal, the second signal and the third signal with the phase differences of 90 °;
(2) generating, by averaging the sum of the first signal and the third signal, the fourth signal;
(3) comparing, by the first comparator, the first signal with the fourth signal, and outputting, by the first comparator, the first comparison signal being the high level when the first signal is greater than the fourth signal or being the low level when the first signal is less than the fourth signal;
(4) comparing, by the second comparator, the second signal with the fourth signal, and outputting, by the second comparator, the second comparison signal being the high level when the second signal is greater than the fourth signal or being the low level when the second signal is less than the fourth signal; and
(5) taking the first comparison signal or the second comparison signal as a counting object, performing counting based on the rising edge and the falling edge of the first comparison signal or the second comparison signal; and determining the displacement direction of the tape based on the phase difference between the first comparison signal and the second comparison signal and calculating out the displacement.

12. The measuring method of the digital display tape measure as claimed in claim 11, wherein the step (5) specifically comprises: when taking the first comparison signal as a counting signal and the second comparison signal as a direction determining signal,
the rising edge of the first comparison signal while the second comparison signal is at the low level triggers a positive increment in the counting, indicating the tape is moving outward;
the rising edge of the first comparison signal while the second comparison signal is at the high level triggers a negative increment in the counting, indicating the tape is moving inward; thereby realizing displacement measurement and readout.

13. The measuring method of the digital display tape measure as claimed in claim 11, wherein the step (2) further comprises: after the fourth signal is generated by averaging the sum of the first signal and the third signal, adjusting, by the MCU through PWM signal control circuits or DAC signal control circuits based on a duty cycle of the fourth signal, brightnesses of the photoelectric sensors for generating the first signal and the second signal, to thereby keep the duty cycle of the fourth signal at 50%.

14. A digital display tape measure, comprising a digital display sensor, a display screen, and a control circuit board; wherein the display screen is configured to display a feedback result of the digital display sensor, and the control circuit board is electrically connected to the digital display sensor and the display screen;
wherein the digital display sensor comprises first through third photoelectric sensors equidistantly arranged, signal acquisition circuits electrically connected to the first through third photoelectric sensors respectively, a first comparator, a second comparator, and a signal processing circuit;
wherein the first through third photoelectric sensors are respectively configured to acquire first through third signals, a phase difference between output waveform signals of the first signal and the second signal and a phase difference between output waveform signals of the second signal and the third signal each are 90°; a fourth signal is configured to be generated by averaging a sum of the first signal and the third signal;
wherein a negative input terminal of the first comparator and a negative input terminal of the second comparator are configured to connect the fourth signal, a positive input terminal of the first comparator is configured to connect the first signal, and a positive input terminal of the second comparator is configured to connect the second signal; the first comparator is configured to compare the first signal with the fourth signal, and output a first comparison signal being a high level when the first signal is greater than the fourth signal or being a low level when the first signal is less than the fourth signal; and the second comparator is configured to compare the second signal with the fourth signal, and output a second comparison signal being a high level when the second signal is greater than the fourth signal or being a low level when the second signal is less than the fourth signal; and
wherein the control circuit board is configured to perform counting by acquiring a rising edge and a falling edge of one of the first comparison signal and the second comparison signal, determine a displacement direction of a tape of the digital display tape measure based on a phase difference between the first comparison signal and the second comparison signal, calculate out displacement, and output the displacement to the display screen; and the tape is disposed with evenly spaced stripes.

15. The digital display tape measure as claimed in claim 14, wherein the control circuit board is integrated with a MCU, the MCU is electrically connected to the first comparator, the second comparator, the first through third photoelectric sensors, the signal acquisition circuit, the signal processing circuit, and the display screen; and the MCU is configured to perform the counting by acquiring the rising edge and the falling edge of the first comparison signal or the second comparison signal, determine the displacement direction of the tape based on the phase difference between the first comparison signal and the second comparison signal, calculate out the displacement, and output the displacement to the display screen.
